Europäisches Patentamt

**European Patent Office**

Office européen des brevets

(11) Publication number: **0 243 036**

**A1**

(12) # EUROPEAN PATENT APPLICATION

(21) Application number: **87303055.5**

(51) Int. Cl.³: **G 10 G 1/02**
**G 09 B 15/00**

(22) Date of filing: **08.04.87**

(30) Priority: **17.04.86 GB 8609384**

(43) Date of publication of application:
**28.10.87 Bulletin 87/44**

(84) Designated Contracting States:
**AT BE CH DE ES FR GB IT LI NL SE**

(71) Applicant: **McCarthy, Brian Thomas**
**"Zaca" Medlock Road Woodhouses**
**Failsworth Manchester(GB)**

(72) Inventor: **McCarthy, Brian Thomas**
**"Zaca" Medlock Road Woodhouses**
**Failsworth Manchester(GB)**

(74) Representative: **Barker, Rosemary Anne et al,**
**Barlow, Gillett & Percival 94 Market Street**
**Manchester M1 1PJ(GB)**

(54) **Musical aid.**

(57) A device which enables the notes of or fret finger positions for a large number of chords to be determined in a quick and simple manner comprises a cover disc (20) overlying a larger plate (10) and attached thereto for relative rotation by means of a central pin (40). The cover disc (20) is provided with at least one window (15, 16) in the form of a radial slot and has notes of the chromatic scale inscribed in radial sequence adjacent the or each window. The underlying plate (10) has the names of types of chords arranged around its peripheral margin outwardly of the cover disc (20) and the notes constituting these chords or fret finger positions to achieve these chords inscribed in radial sectors (12) inwardly of the names and in positions corresponding to the sequence of notes on the cover disc (20). Thus the plate (10) and the disc (20) can be relatively rotated so as to reveal, in the window (15, 16) the notes of or, respectively, the fret finger positions for any given chord.

Fig.1

EP 0 243 036 A1

## MUSICAL AID

This invention relates to a musical aid which enables rapid ascertainment of the notes of a chord and thus assists in composition, arrangement or elaboration of tunes.

Various devices comprising relatively rotatable discs with windows cut in an overlying disc so as selectively to reveal information displayed on an underlying disc have been proposed to enable the notes of certain chords to be determined. Examples are disclosed in British Patent Specification Nos. 1328460 and 1486258. However, these devices have included only a limited number of simple or well known chords and/or have been complex in their construction and operation in that a user had to look at several different places on the discs to find the notes of any desired chord.

An object of the present invention is to provide a device of this kind which is extremely simple both to produce and to use, yet which allows the notes of a large number of chords, even obscure and little-used chords, to be ascertained.

According to the invention a musical aid fulfilling this object comprises a cover disc overlying a larger plate and attached thereto for relative rotation by means of a central pin, the larger plate having indicia arranged at intervals around its peripheral margin outwardly of the cover disc and the cover disc being provided with windows through which other indicia on the larger plate are selectively revealed, characterised in that the cover disc is provided with at least one window in the form of a radial slot and has notes of the chromatic scale inscribed in radial sequence adjacent the or each such window, in that the indicia around the peripheral margin of the larger plate consist of the names of types of chords, and in that the other indicia on the larger plate consist of the notes of the relevant types of chords or of diagrams showing fret finger positions for string instruments arranged in radial sectors inwardly of the names thereof and in positions corresponding to the sequence of notes on the cover disc so that the notes which constitute any selected type of chord or, respectively the fret finger positions to be used to achieve any selected type of chord, can be revealed in the window or windows by relative rotation of the cover disc and the larger plate.

Preferably, a first cover disc is attached to one side of the larger plate and a second cover disc is attached to the other side of the larger plate so as to double the number of chords which can be indicated on the device.

Conveniently, there are two opposing radial windows in the or each cover disc, six of the twelve musical notes of the chromatic scale being inscribed, in a row, adjacent each window. This arrangement is advantageous because it reduces the required radius of the cover disc or discs and hence reduces the entire device to a more manageable size. However, it is then necessary to have the chord types arranged around one half of the peripheral margin of the larger plate repeated (duplicated) around the other half of the same side of the plate so as to allow the notes of the chords based on all twelve notes of the scale to be shown. To avoid the possibility of any errors, and facilitate rapid operation of the device by a user, the respective 'duplicate' halves of the underlying larger plate are preferably of different, readily distinguished colours, e.g. red and black or red and blue or blue and black, and the scale notes or 'letter' notes on the cover disc are depicted in matching colours so that it will be immediately apparent to the user that the window with scale notes or 'letter' notes of one colour thereadjacent should overlie that half of the larger plate of the same colour in order to have the correct chord notes revealed in the window.

Advantageously, eighteen chords types are inscribed in equi-angular regions around the peripheral margin of each side of the larger plate. However, if desired, fewer or perhaps one or two more, chords types can be shown. In any event, with a two-sided device it is convenient from the point of view of reducing production costs, to have the same number of chord types at each side of the device so that the angle and area of the windows in the respective cover discs can be identical. In other words, only one shape of cover disc is then required.

In a preferred embodiment of the device of the invention, the larger plate is square or rectangular but has a circle inscribed thereon which is concentric with and of larger diameter than the relevant cover disc, the names of the types of chords being arranged around the circumferential margin of this circle. A square or rectangular shape is especially convenient for placing in a protective sleeve and/or for bearing operating instructions in its corner regions.

An advantageous additional feature which may be incorporated into the musical aid of the invention is a small circular disc overlying the or one of the cover discs and mounted rotatably relative thereto by means of the central pin. This small disc has the twelve notes of the chromatic scale inscribed at equidistant spacings around its circumferential margin (as a chord cycle) and the same sequence of notes is shown on the respective cover disc immediately circumadjacent the small disc. When rotated relative to the cover disc the small disc can be used to facilitate transposition from one key to another.

Another additional feature which can be incorporated is a similar circular array of notes (known as a chord cycle) enabling alernative 7th chords to be found.

The invention will be described further, by way of example, with reference to the accompanying drawings, in which:

Fig. 1 is a plan view of a first side of a preferred practical embodiment of the musical aid of the present invention; and

Fig. 2 is a plan view of the second side of the same embodiment as shown in Fig. 1.

The practical embodiment of the invention which is shown in the drawings comprises an underlying plate 10, which is square, and two circular cover discs 20, 30, which are attached by means of a central pin 40 to respective sides of the larger disc 10.

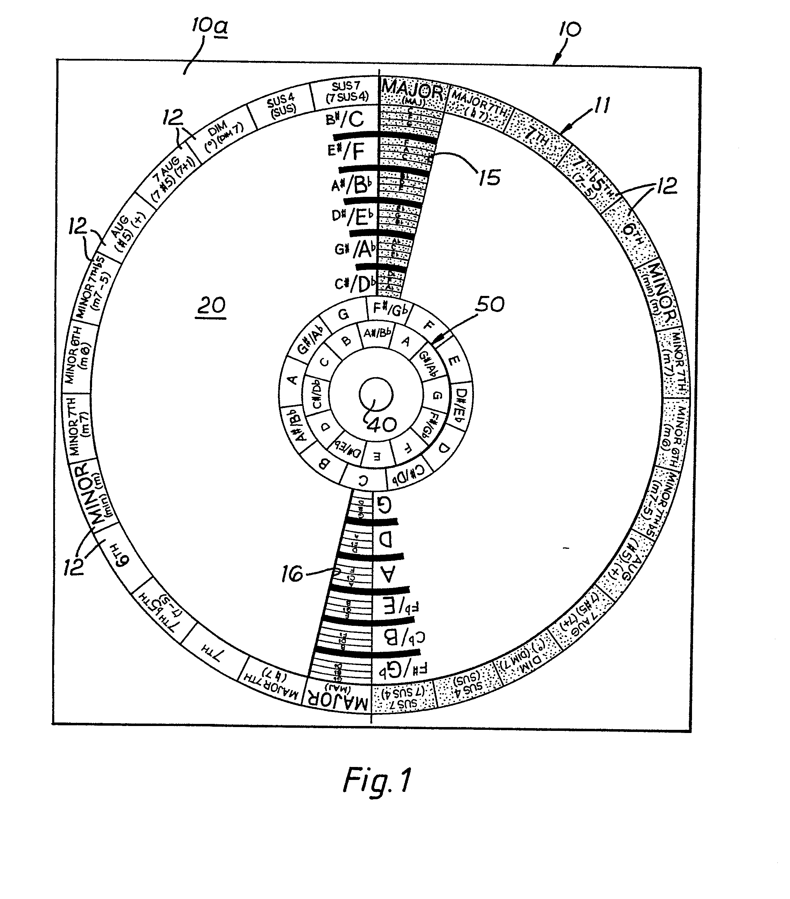

Referring firstly to Fig. 1 of the drawings, the first side 10a of the underlying larger plate 10 has a large circle 11, with a radius of some 14 or 15cm, depicted thereon. This circle 11 is divided into twenty eight equal radial segments 12 (each 12.85$^{\circ}$). The names (sometimes abbreviated) of various types of chords are depicted in the circumferential margins of each of these segments 12. Around one half of the circle 11, the following fourteen chord types are indicated in sequence:

Major; major 7th; 7th; 7th ♭ 5th; 6th; minor; minor 7th; minor 6th; minor 7th ♭ 5; augmented; 7th augmented; diminished; suspended 4th; suspended 7th.

Sometimes alternative, popularly used names or symbols are also used.

The names of these chord types are repeated in the same sequence around the other half of the circle 11 so that opposite segments have the same circumferential heading so to speak. The reason for this will become apparent shortly.

In the first half of the circle 11 everything is depicted in or on blue (as indicated by stippling in Fig. 1) and the notes of chords based on C, F, Bb, Eb, Ab, Db, are indicated in the radial segments 12 below the respective types of chords.  In the other half of the circle 11, everything is depicted in or on pink or red and the notes of chords based on Gb, B, E, A, D, G are indicated in the radial segments 12 below the respective types of chords.

The first cover disc 20 is superimposed on the first side 10a of the plate 10, as shown in Fig. 1.  The cover disc 20 is about 1 or 2cm smaller in radius than the circle 11 shown on the plate 10 and is attached rotatably thereto by means of the central pin 40.  The chord types around the circumferential margins of the circle 11 thus remain visible when the cover disc 20 is in place.

On the cover disc 20, opposing radial segments of 13° or thereabouts are cut away almost to the centre of the disc 20 so as to provide respective windows 15, 16 in the form of radial slots.  Adjacent one of the windows 15, from the circumference towards the centre, six of the twelve notes of the chromatic scale, namely C, F, Eb, Bb, Ab, Db (together with their equivalents) are listed in blue at even spacings, whilst adjacent the other window 16, the other six notes of the chromatic scale, namely Gb, B, E, A, D, G, (together with their equivalents) are
similarly listed in red.

To find the notes of any of the types of chords
depicted around the edge of the circle 11 of the underlying
plate side 10a based on any given note of the scale,
the cover disc 20 and the plate 10 are relatively
rotated until the window 15 or 16 adjacent which the
relevant root note is shown lies immediately in line
with that chord type depicted in the same colour. The
notes of that chord based on all of the scale notes are
then revealed in the windows 15, 16 and the notes of the
chord based on the particular one required can be read
off immediately adjacent that relevant scale note
(which is also the root note of the chord). For example,
for C major, the notes are CEG, as indicated at the top
of Fig. 1.

The purpose of having the two colours is to allow
for indication of the chord notes for six of the twelve chro-
matic scale notes on one half of the device and for the other
six on the other half of the device, the colours being
used to match up at a glance the cover disc windows 15,
16 with the appropriate half of the underlying plate
side 10a.

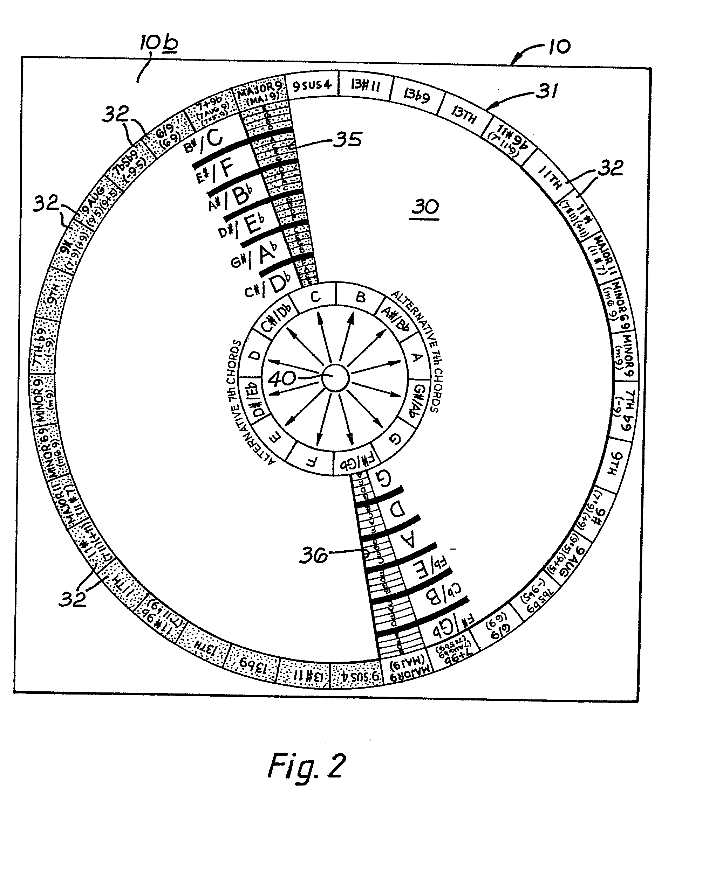

Turning now to consideration of the second side 10b of the plate 10 and the cover disc 30 attached thereto, as shown in Fig. 2, the principles involved are the same as for the first side of the device described above. Indeed, the layout of the second plate side 10b and the cover disc 30 as well as their functions are virtually the same as that of the first side 10a and its cover disc 20. The only difference in layout is that eighteen chord types are indicated instead of fourteen, necessitating smaller radial segments 32 within the circle 31 and smaller windows 35, 36 (of 10° each instead of 13°) compared to the above-described side. These eighteen chord types are different from the fourteen dealt with on the first side 10a, and are more complex. Moreover, as they are 9th, 11th and 13th type chords more than four notes are required for each chord so that as each set of chord notes is found the user has to add thereto the root note for which the chord is sought. Otherwise operation of this side is exactly the same as previously described.

The eighteen chords depicted are again repeated on opposing halves of the circle of the underlying plate side 10b, the two halves being of contrasting colours, in this case pink and blue, the latter indicated by stipples in Fig. 2. The chords types are as follows:

13th # 11th; 13th b 9th; 13th; # 11th b 9th;

11th; # 11th; Major 11th; minor 6th/9th; minor 9th;

7th b 9th; 9th; # 9th; 9th augmented; 7 b 5th b 9th;

6th/9th; 7th aug b 9; major 9th; 9th Sus 4th.

When the chords are found on either side of the device, the notes should be read from the outermost of the relevant group towards the centre pin 40. On the second side 10b the root note must be added _before_ the group of notes are read. The notes are then at the correct or conventional musical intervals. In practice, of course, a musician may play these notes in any order or arrangement, depending on the circumstances.

It will, of course, be appreciated also that in all cases alternative key names may be given, e.g. Gb/F# or Cb/B.

Turning back to the first side of the device shown in Fig. 1, a transposition aid in the form of a small circular disc is concentrically and rotatably superimposed upon the cover disc 20. The twelve notes of the chromatic scale (which also represent musical keys) are depicted (as a chord cycle) equidistantly around the circumference of the disc 20 circumadjacent the small disc 50. When transposing from one key to another, one simply aligns the two relevant notes on the respective cycles (one representing the existing written key, the other the new key required) and all the notes of the new key corresponding to each of the notes of the old key can be read off adjacent the old key notes.

On the second side of the device, shown in Fig. 2, a similar chord cycle(merely a circular array of equidistantly spaced notes) is depicted centrally on the cover disc 30 without any addictional small disc. This enables alternative 7th chords to be quickly found as they lie opposite one another in the cycle.

The great advantage of the above-described device compared to all previously proposed devices for similar purposes is that all the chord notes for each chord have been determined and printed in a group and these can be immediately seen by a user upon rotation of a single disc, i.e. the relevant cover disc 20 or 30. In other words there is no need for a complex sequence of rotation of numerous discs nor looking at different positions around the disc to find the relevent chord notes based on any root note/scale note. Also with the two-sided construction of device almost all known chords can be shown on the single device.

The particular embodiment described above and illustrated in the drawings has fourteen chord types on one side and eighteen on the other, making a total of thirty-two chord types based on all the twelve chromatic scale notes, i.e. 384 chords in total. In an advantageous development, eighteen different chords could be provided for an each side, i.e. four extra on the first side, so that the segment sizes and the cover disc sizes are the same at both sides. This would enable thirty-six types of chords to be shown, i.e. 432 chords in all. More chords could theoretically be accommodated (although there are not in fact many more chords than that) but the device might then have to be made larger so that the segments are not so small that the printing became too small to be easily visible.

Of course, the colours used for the different halves of the discs sides can differ from the exemplified embodiment as long as they are readily visually distinguable.

In further embodiments it may not in fact be necessary to have the sides divided into halves since up to thirty-six chords (or more) in six keys could be shown on one side with the same chords shown for the other six keys on the other side. In such embodiments only a single window could be provided in each cover disc.

In all cases the windows could be subdivided, if desired, to facilitate at a glance separation of the groups of notes forming the respective chords.

Other variations are possible within the scope of the invention. For example, although the square shape of the larger disc in the illustrated example is convenient for insertion into a protective sleeve and for inscription of instructions for use on the corner regions, this shape is not essential and the larger disc plate may simply be another circular disc, possibly of corresponding diameter to the circle 11 or 31 in the illustrated example. Also the transposition aid and the chord cycle enabling alternative 7th chords to be readily found are merely preferred optional extras. They are not essential. Furthermore it should be borne in mind that the invention also encompasses a simpler single-sided device having only one cover disc in which case only one of the two possibilities, namely a transposition aid or an alternative 7th chord-finding cycle can be incorporated upon the cover disc.

Finally, in other embodiments of the invention, which may also include the variations referred to in the preceding.paragraph, in place of the notes making up the various types of chords, diagrams showing fret finger positions to achieve these chord notes in string instruments, e.g. guitars, may be depicted in the radial sectors of the larger plate for selected disclosure in the radial windows.

LB030487                        - 14 -

## CLAIMS

1.  A musical aid for determining the notes of selected
chords comprising a cover disc (20,30) overlying a
larger plate (10) and attached thereto for relative
rotation by means of a central pin (40), the larger plate
having indicia arranged at intervals around its peripheral margin outwardly of the cover disc and the cover
disc being provided with windows through which other
indicia on the larger plate are selectively revealed,
characterised in that the cover disc (20, 30) is provided with at least one window (15, 16, 35, 36) in the
form of a radial slot and has notes of the chromatic
scale inscribed in radial sequence adjacent the or each
such window, in that the indicia around the peripheral
margin of the larger plate (10) consist of the names of
types of chords, and in that the other indicia on the
larger plate (10) consist of the notes of the relevant
types of chords or of diagrams showing fret finger
positions for string instruments arranged in the radial
sectors (12, 32) inwardly of the names thereof and in
positions corresponding to the sequence of notes on
the cover disc (20, 30) so that the notes which constitute any selected type of chord or, respectively, the
fret finger positions to be used to achieve any selected type of chord, can be revealed in the window or
windows (15, 16, 35, 36) by relative rotation of the
cover disc and the larger plate.

2.  A musical aid as claimed in claim 1 wherein a first
cover disc (20) is attached to one side (10a) of the larger plate (10) and a second cover disc (30) is
attached to the other side 10b of the larger plate (10).

3.    A musical aid as claimed in claim 1 or 2 wherein
the or each cover disc (20, 30) is provided with two
opposing windows, (15, 16, 35, 36) each in the form of
a radial slot and has six of the twelve notes of the
chromatic scale inscribed in radial sequence adjacent
each window.

4.    A musical aid as claimed in claim 3 wherein respective halves of the or each side of the larger plate (10)
are coloured differently and the notes inscribed adjacent
the respective windows (15, 16, 35, 36) of the or each
cover disc (20, 30) are depicted in colours to match that
half of the larger plate (10) which each window should
overlie to reveal the correct chord notes.

5.    A musical aid as claimed in any preceding claim
wherein the names of up to eighteen types of chords are
inscribed in equi-angular regions around the peripheral
margin of the or each side of the larger plate (10).

6.    A musical aid as claimed in any preceding claim
wherein the larger plater (10) is square or rectangular
but has a circle (11, 31) inscribed thereon which is
concentric with and of larger diameter than the relevant
cover disc (20, 30), the names of the types of chords being arranged around the circumferential margin of this circle (11, 31).

7.    A musical aid as claimed in any of claims 1 to 5 wherein the larger plate is also in the form of a circular disc.

8.    A musical aid as claimed in any preceding claim further including a key transposition aid in the form of small circular disc (50) overlying the or one of the cover discs (20) and mounted rotatably relative thereto by means of the central pin (40), this small disc (50) having the twelve notes of the chromatic scale inscribed at equidistant spacings around its circumferential margin, and the cover disc (20) also having the same sequence of twelve notes inscribed immediately circumadjacent the small disc (50).

0243036

1/2

Fig.1

0243036

2/2

Fig. 2

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 481 241 (GAILLARD) <br> * Claim 1; figures 2-4 * | 1,7 | G 10 G 1/02 <br> G 09 B 15/00 |
| A,D | FR-A-2 046 691 (EVEILLARD) <br> * Claim 1; figures 3,4 * & GB-A-1 328 460 | 1,7 | |
| A | US-A-2 649 008 (BOVE et al.) <br> * Column 3, lines 21-59; figures 1-6 * | 1,7 | |
| A | US-A-2 497 364 (MAYBERRY) <br> * Column 1, lines 16-31; column 5, lines 14-43; figures 1,4 * | 1,8 | |

TECHNICAL FIELDS SEARCHED (Int. Cl.4)

G 10 G
G 09 B

The present search report has been drawn up for all claims

| Place of search | Date of completion of the search | Examiner |
|---|---|---|
| THE HAGUE | 28-07-1987 | ANDERSON A. TH. |